# EUROPEAN PATENT APPLICATION

(11) **EP 3 722 877 A1**
(43) Date of publication of application: **14.10.2020**
(21) Application number: 20165933.1
(22) Date of filing: 26.03.2020
(51) Int. Cl.: G03B 35/08, H04N 13/00

(54) **MOUNTING APPARATUS, IMAGE CAPTURING SYSTEM, AND IMAGE GENERATION SYSTEM**

(30) Priority: 03.04.2019 JP 2019071506
(71) Applicant: CANON KABUSHIKI KAISHA, OHTA-KU Tokyo 146-8501 (JP)
(72) Inventor: HIROBE, Toshinori, Tokyo 146-8501 (JP)
(74) Representative: WESER & Kollegen Patentanwälte PartmbB

(57) **Abstract**

A mounting apparatus comprising: a base means configured to fix the mounting apparatus to an object; a holding means on which a plurality of image capturing apparatuses are installable; a rotation mechanism means installed on the base means to rotatably support the holding means; and a plurality of adjustment means configured to rotate at least around an axis substantially parallel to a rotation axis of the rotation mechanism means, the plurality of adjustment means enabling the plurality of image capturing apparatuses to rotate in an identical direction around an axis substantially parallel to the rotation axis of the rotation mechanism means.

## Description

### BACKGROUND OF THE INVENTION

### Field of the Invention

The present disclosure relates to a mounting apparatus, an image capturing system, and an image generation system.

### Description of the Related Art

In recent years, a virtual viewpoint image generation apparatus has been known that includes a plurality of image capturing apparatuses (cameras) installed in a facility such as a stadium, to generate, for a sporting event, a concert, or the like, a virtual viewpoint image from an any specified viewpoint using multi-viewpoint images captured from a multiplicity of directions by groups of a plurality of the cameras.

In a case where the plurality of cameras are installed in spectators stands in a facility such as a stadium, the cameras need to be installed on the building frame such as column portions, ceiling surfaces, or wall surfaces in the spectators stands such that the cameras do not obstruct the view of the spectators.

In this case, depending on requirements such as the number of cameras installed, an image capturing direction, and the structure of a stadium or the like in which the cameras are installed, the plurality of cameras may need to be installed in parallel on one mounting apparatus.

In particular, in the stadium or the like, locations where the cameras can be mounted are limited. Thus, in order to prevent the installed cameras from causing problems such as obstruction to movement of spectators or obstruction of field of view of the spectators or in order to reduce the scale of installation work, it is desirable to reduce the number of mounting apparatuses as much as possible and to install the plurality of cameras in parallel on one mounting apparatus.

Japanese Patent Laid-Open No. 2012-191495 discloses a method for mounting a three-dimensional camera including two cameras installed in parallel in a horizontal direction on one mounting apparatus.

However, the technology described in Japanese Patent Laid-Open No. 2012-191495 does not take into consideration a case where image capturing directions span wide angles with respect to a forward direction of the mounting apparatus. Thus, when the image capturing direction of a certain camera is oblique to the forward direction of the mounting apparatus, an adjacently installed camera may enter an image capturing range of the certain camera.

In view of the problems described above, the present disclosure provides a technology for inhibiting an adjacently installed camera from entering the image capturing range.

### SUMMARY OF THE INVENTION

According to one aspect of the present disclosure, there is provided a mounting apparatus as specified in claims 1 to 9.

According to another aspect of the present disclosure, there is provided an image capturing system as specified in claim 10.

According to another aspect of the present disclosure, there is provided an image generation system as specified in claim 11.

Further features of the present disclosure will become apparent from the following description of exemplary embodiments (with reference to the attached drawings).

### BRIEF DESCRIPTION OF THE DRAWINGS

FIGS. 1A, 1B, and 1C are schematic views illustrating an example of a camera mounting apparatus.
FIGS. 2A and 2B are schematic views illustrating an example of a camera mounting apparatus in which cameras face an oblique direction.
FIGS. 3A, 3B, and 3C are schematic views illustrating a camera mounting apparatus according to a first embodiment.
FIGS. 4A and 4B are schematic views illustrating the camera mounting apparatus in which cameras face an oblique direction according to the first embodiment.
FIGS. 5A and 5B are diagrams for describing effects of the camera mounting apparatus according to the first embodiment.
FIG. 6 is a diagram illustrating a modification example of the camera mounting apparatus according to the first embodiment.
FIG. 7 is a diagram illustrating a modification example of the camera mounting apparatus according to the first embodiment.
FIGS. 8A, 8B, and 8C are schematic views illustrating a camera mounting apparatus according to a second embodiment.
FIGS. 9A and 9B are schematic views illustrating the camera mounting apparatus in which cameras face an oblique direction according to the second embodiment.
FIGS. 10A and 10B are diagrams for describing effects of the camera mounting apparatus according to the second embodiment.
FIGS. 11A and 11B are diagrams illustrating a modification example of the camera mounting apparatus according to the first embodiment.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made an invention that requires all such features, and multiple such features may be combined as appropriate. Furthermore, in the attached drawings, the same reference numerals are given to the same or similar configurations, and redundant description thereof is omitted.

### First Embodiment

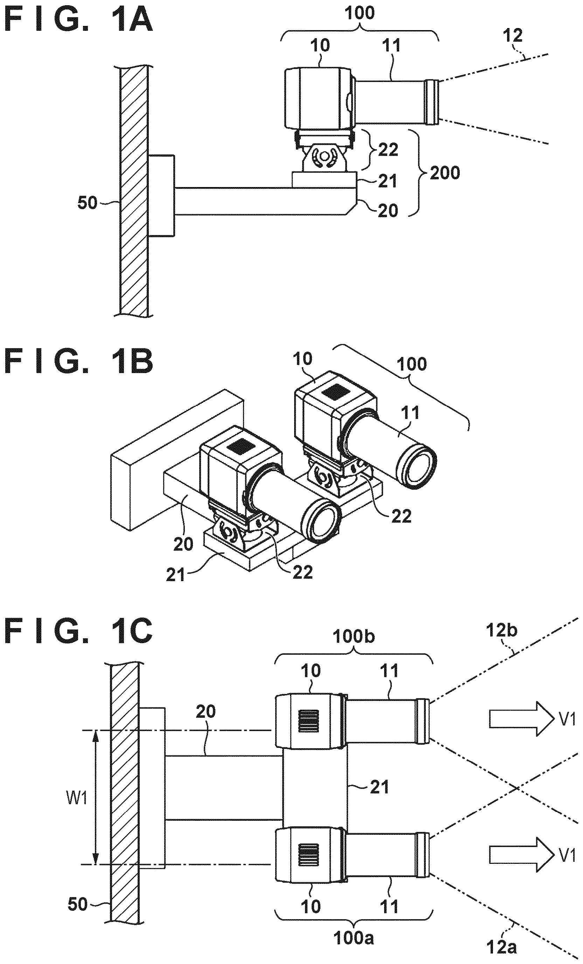

Hereinafter, with reference to FIGS. 1A to 6, a camera mounting apparatus according to a first embodiment will be described in which a plurality of image capturing apparatuses (hereinafter referred to as cameras) are installed in parallel on one mounting apparatus. A plurality of cameras and a mounting apparatus constitute an image capturing system. First, with reference to FIGS. 1A to 1C, a general camera mounting apparatus will be described in brief in which two cameras are installed on an upper part of a column portion in a spectators stand of a facility such as a stadium using one mounting apparatus. FIGS. 1A to 1C illustrate a structure in which, on an upper part of a column portion 50 in a spectators stand of a stadium, two camera units 100 are installed in parallel in the horizontal direction using the camera mounting apparatus 200. Note that the present embodiment will be described taking an example in which two cameras are installed on the mounting apparatus, but the number of cameras is not limited to this. Three or more cameras may be installed on the mounting apparatus. Also, some of the plurality of mounting apparatuses may include only one or even no camera installed.

FIG. 1A is a side view, FIG. 1B is a perspective view, and FIG. 1C is a plan view from above. A camera unit 100 includes a camera main body 10 and a lens 11, and an image capturing range 12 represents an image capturing range of the camera unit 100.

The camera mounting apparatus 200 includes a base unit 20, a camera holding arm (holding unit) 21, and a plurality of adjustment mechanisms 22. The base unit 20 is a base that is fixed to the column portion 50 in the stadium. The camera holding arm 21 is an arm that can hold a plurality of camera units 100. The camera holding arm 21 is shaped to extend horizontally from an upper part of the pillar portion 50 in the stadium so that two camera units 100 are installed in parallel on the camera holding arm 21. The plurality of adjustment mechanisms 22 are fixed to the camera holding arm 21 to hold the plurality of camera units 100 respectively and can adjust an image capturing direction of each of the camera units 100 in a pan/tilt/roll direction.

Here, as illustrated in FIG. 1C, when the image capturing directions of two camera units 100a and 100b are substantially a forward direction V1 with respect to the column portion 50, in a case where the two camera units arranged in parallel are installed side by side at an arrangement interval w1, image capturing ranges 12a and 12b of the respective camera units 100a and 100b do not interfere with each other.

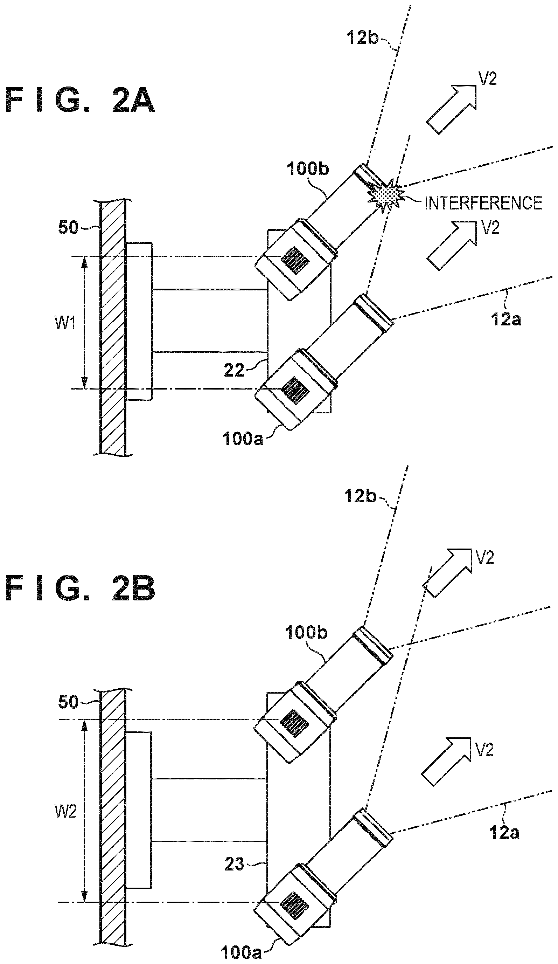

Now, another case will be described where, as illustrated in FIG. 2A, for example, the image capturing directions of the two camera units 100 are changed from the forward direction V1 to an oblique direction V2 with respect to the column portion 50, with the arrangement in FIG. 1C unchanged. In this case, a part of a housing of the camera unit 100b installed adjacently to the camera unit 100a enters the image capturing range of the camera unit 100a, which obstructs image capturing by camera unit 100a. Thus, the camera unit 100a is not allowed to face such an image capturing direction.

Thus, as illustrated in FIG. 2B, instead of the camera holding arm 21 with the installation interval w1, a camera holding arm 23 may be used for which the installation interval between the two camera units 100 is w2 that is wider than w1. This may prevent the housing of the adjacently installed camera unit 100b from entering the image capturing range 12a of the camera unit 100a.

However, in a case where the installation interval is w2, which is wider than w1, the camera holding arm 23 is larger than the camera holding arm 21. For example, a large number of cameras need to be installed, in a case where, a virtual viewpoint image generation system is installed in a stadium, and the system includes a plurality of cameras and generates a virtual viewpoint image from an any specified viewpoint using multi-viewpoint images from a multiplicity of directions captured and acquired by a group of cameras. Accordingly, a large number of mounting apparatuses for the cameras are also required. A plurality of images captured by the plurality of cameras installed on the mounting apparatuses are used to generate virtual viewpoint images. Note that the virtual viewpoint image is an image representing a vision from a specified viewpoint. The virtual viewpoints may be freely (any) specified by a user or may be selected from a plurality of candidates by the user. Additionally, designation of the virtual viewpoints may be executed automatically by an image generation system for virtual viewpoint images based on the results of image analysis or the like.

When the mounting apparatuses are commonly used with installation intervals corresponding to various image capturing directions and wide-angle image sensing of the multiplicity of cameras installed at various locations in the stadium, the installation interval between the cameras increases. As a result, the mounting apparatuses are larger in size, causing various problems such as increased manufacturing costs, increased mounting work costs due to increased size and weight of the mounting apparatus, and increased transportation costs. Methods are also available for providing a plurality of types of mounting apparatuses each corresponding to required installation intervals depending on the image capturing directions and ranges of the cameras at the respective mounting locations. However, the methods cause problems such as increased costs and complicated installation work due to increased component types.

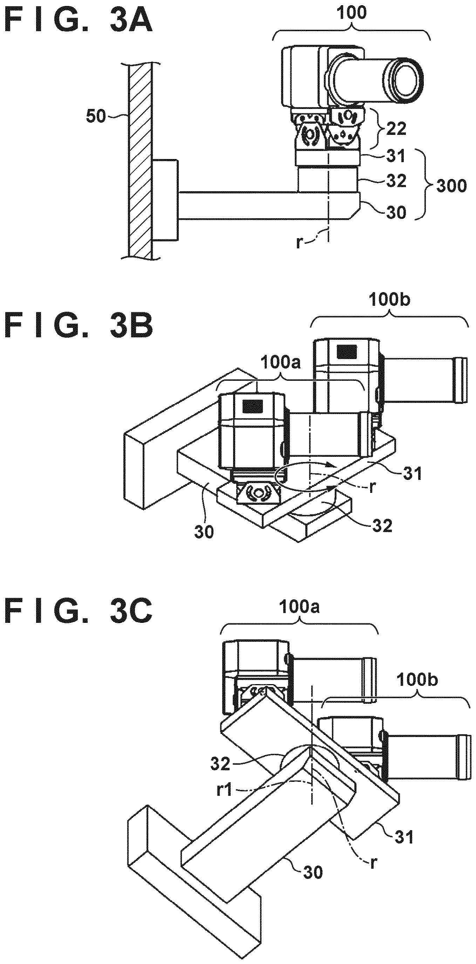

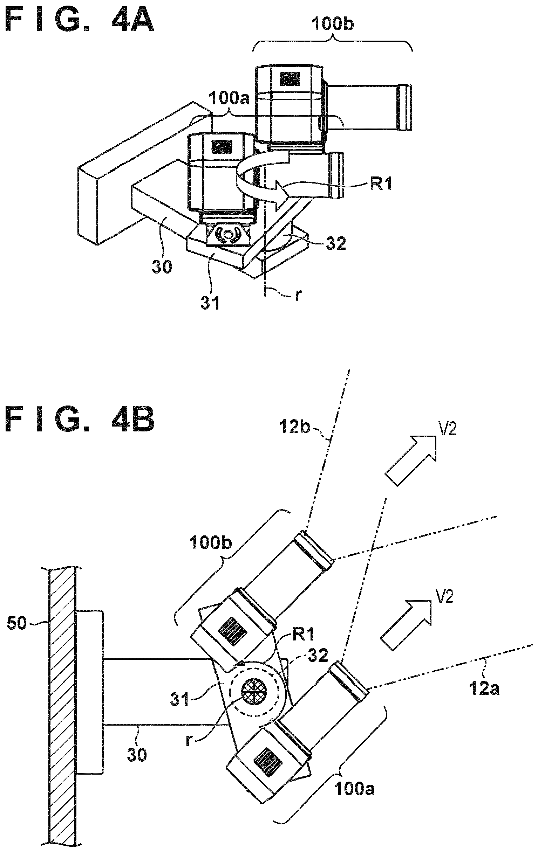

In contrast, with reference to FIGS. 3A to 4B, a configuration will be described that enables a reduction in the size of a mounting apparatus on which a plurality of cameras can be installed in parallel, while increasing the degree of freedom in image capturing direction of each camera.

FIGS. 3A to 3C are schematic diagrams of configuration of a mounting apparatus for a plurality of cameras according to the present embodiment. FIG. 3A illustrates a side view, FIG. 3B illustrates a perspective view, and FIG. 3C illustrates a plan view. In FIG. 3A to FIG. 3C, a camera mounting apparatus 300 has a structure in which two camera units 100a and 100b are installed in parallel in the horizontal direction on a mounting object (for example, the column portion 50 in a stadium or the like).

The camera mounting apparatus 300 includes a base unit 30, a camera holding arm 31, an arm rotation mechanism unit 32, and an adjustment mechanism 22. The base unit 30 is fixed to the column portion 50 in the stadium. The camera holding arm 31 is an arm on which the two camera units 100a and 100b can be installed in parallel in the horizontal direction. The arm rotation mechanism unit 32 is a mechanism that rotatably supports the camera holding arm 31 with respect to the base unit 30. The arm rotation mechanism unit 32 supports, at a position where the two camera units 100a and 100b are substantially symmetrically arranged, the camera holding arm 31 rotatably around a rotation axis corresponding to the vertical direction with respect to the horizontal direction in which the plurality of camera units are installed in parallel.

The plurality of adjustment mechanisms 22 are fixed to the camera holding arm 31 to hold the camera units 100a and 100b respectively and can adjust the image capturing directions of the respective camera units respectively. In the present embodiment, the adjustment mechanism 22 can adjust the image capturing direction to three axial directions including a tilt rotation direction and a roll rotation direction, in addition to a pan rotation direction corresponding to a rotation axis substantially parallel to the rotation axis of the arm rotation mechanism unit 32. Additionally, the adjustment mechanism 22 enables the plurality of cameras to rotate in the same direction along the pan rotation direction. The camera units 100a and 100b perform a pan rotation while the relation between respective camera units 100a and 100b in the image capturing direction (optical axis) is maintained. Additionally, both of the camera units 100a and 100b rotate in a clockwise direction with respect to the pan rotation axis. Additionally, the adjustment mechanism 22 can also rotate the plurality of cameras in opposite directions along the pan rotation direction. In such a case, one of the camera units 100a and 100b (for example, the camera unit 100a) rotates in a clockwise direction with respect to the pan rotation axis, and the other (for example, the camera unit 100b) rotates anticlockwise with respect to the pan rotation axis.

FIGS. 4A and 4B illustrate that the arm rotation mechanism unit 32 has rotated the camera holding arm 31 in an R1 direction around a rotation axis r of the arm rotation mechanism unit 32. FIG. 4A illustrates a perspective view and FIG. 4B illustrates a plan view. The figures indicate that no interference occurs even in a case where the camera units are rotated to an oblique direction V2.

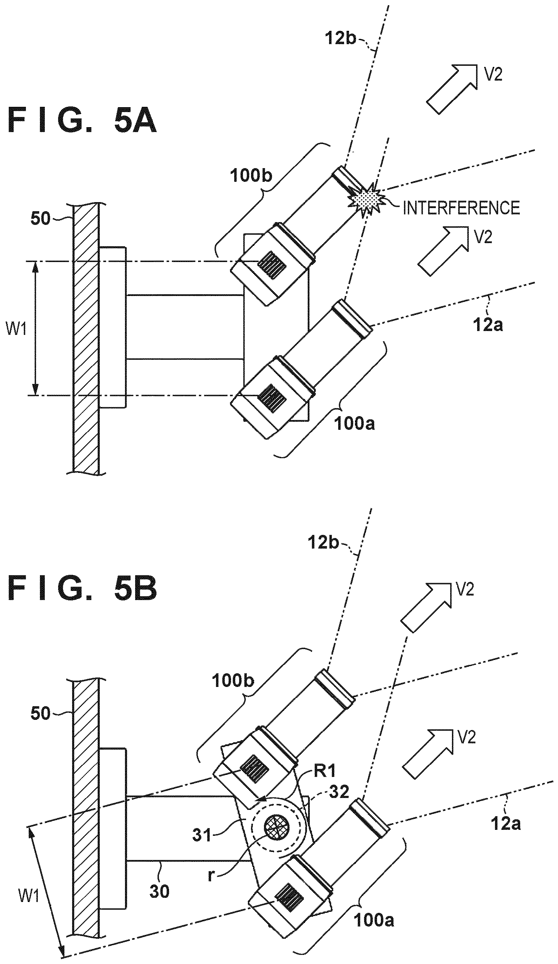

FIG. 5A is a plan view illustrating a positional relationship of each of the components that constitute the camera mounting apparatus when each of the image capturing directions of the two camera units 100a and 100b illustrated in FIGS. 1A to 1C is changed from the forward direction V1 to the oblique direction V2 with respect to the column portion 50. FIG. 5A is a diagram similar to FIG. 2A. FIG. 5B is a plan view illustrating a positional relationship of each of the components that constitute the camera mounting apparatus when each of the image capturing directions of the two camera units 100a and 100b illustrated in FIGS. 3A to 3C is changed from the forward direction V1 to the oblique direction V2 with respect to the column portion 50. In the present embodiment, the installation interval between the two camera units 100a and 100b is w1 as is the case with FIG. 5A.

In a case where the installation interval between two camera units 100a and 100b is w1, in the example illustrated in FIG. 5A, when each of the image capturing directions of the two camera units 100a and 100b is changed from the forward direction V1 to the oblique direction V2 with respect to the column portion 50, the housing of the adjacently installed camera unit 100b enters the image capturing range 12a of the camera unit 100a and obstructs image capturing. On the other hand, in the present embodiment, in a case where the image capturing direction of each of the camera units 100a and 100b is set to the oblique direction V2, the camera holding arm 31 is rotated in the R1 direction by the arm rotation mechanism unit 32, as illustrated in FIG. 5B. At this time, the adjustment mechanism 22 may rotate the axis in the pan direction to adjust the image capturing direction of the camera unit to the oblique direction V2. As illustrated in FIG. 5B, in the present embodiment, even in a case where the installation interval between the two camera units 100a and 100b is w1 as is the case with FIG. 5A, the camera unit 100b is prevented from entering the image capturing range 12a of the camera unit 100a.

This may increase a degree of freedom in the image capturing direction of each of the camera units installed in parallel without increasing the installation interval between the camera units 100a and 100b from w1.

### Modification Example

Note that in the example of FIG. 5B, the arm rotation mechanism unit 32 is provided that rotates the camera holding arm 31 on the base unit 30, at the position where two camera units 100a and 100b are substantially symmetrically arranged on the camera holding arm 31 but that no such limitation is intended.

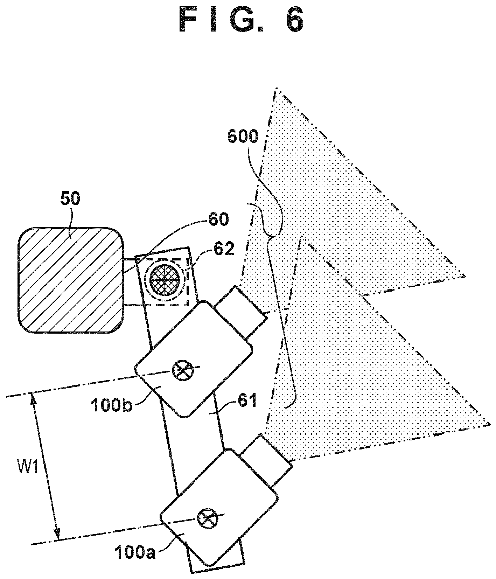

FIG. 6 is a plan view illustrating a configuration example of a camera mounting apparatus 600 according to a modification example. As illustrated in FIG. 6, an arm rotation mechanism unit 62 may be provided on a base unit 60, which is fixed to the column portion 50 in the stadium, at a position where a camera holding arm 61 holding the plurality of camera units 100a and 100b can be rotated around an end portion of the camera holding arm 61. Also, with the configuration in FIG. 6, as is the case with the camera mounting apparatus 300 illustrated in FIG. 5B, the degree of freedom in the image capturing directions of the camera units installed in parallel can be increased without any increase in installation interval between the camera units 100a and 100b from w1.

Note that, in the description in the present embodiment, the example is illustrated in which the two camera units are arranged in parallel in the horizontal direction with respect to the ground surface but that no such limitation is intended and that the two camera units may be installed in parallel in a upper/lower direction (vertical direction).

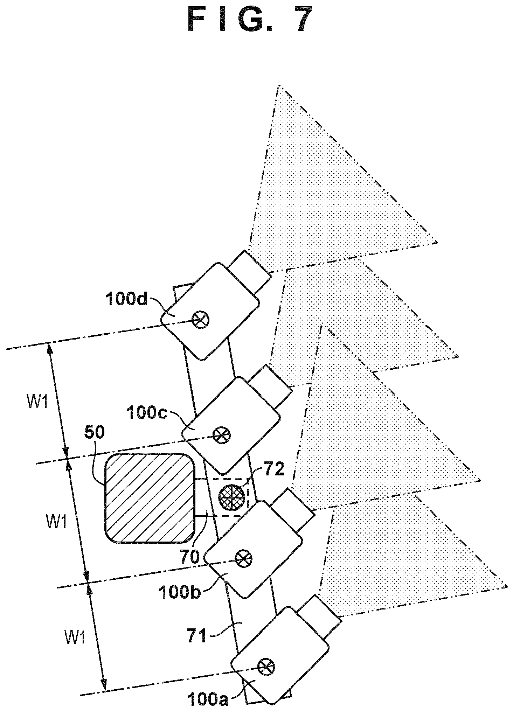

Additionally, in the present embodiment, the example in which the two camera units are installed in parallel is described, but the number of the camera units is not limited to two. For example, FIG. 7 is a plan view illustrating an example in which four camera units are arranged in parallel. As illustrated in FIG. 7, even in a case where two or more units are installed, an arm rotation mechanism 72 may be provided that can rotate a camera holding arm 71 holding a plurality of camera units, with respect to a base unit 70 fixed to the column portion 50 in the stadium. This increases the degree of freedom in the image capturing ranges of more than two camera units.

As described above, under the condition that a multiplicity of cameras are installed to face a variety of directions in a stadium or the like, the same camera mounting apparatuses can be used in a multiplicity of locations, and the installation interval between the plurality of camera units can be shortened.

Thus, the camera holding arm can be downsized, and the camera mounting apparatus as a whole can be downsized. Thus, manufacturing costs and costs required for transportation, mounting work, or the like can be reduced.

### Second Embodiment

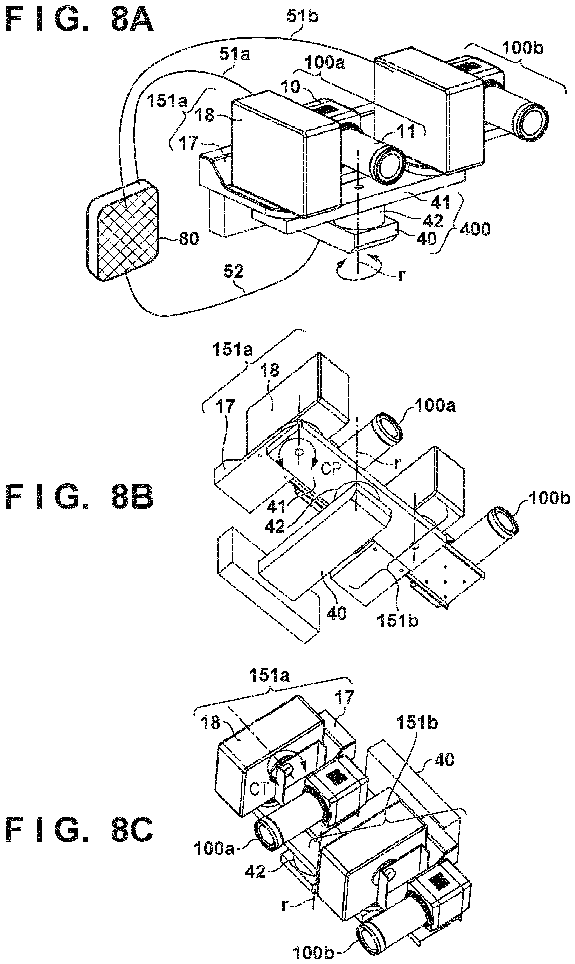

A camera mounting apparatus according to a second embodiment will be described using FIGS. 8A to 11B. In the present embodiment, components that are identical to those of the first embodiment are assigned identical reference signs, and will not be further described.

As illustrated in FIGS. 8A to 8C, a camera mounting apparatus according to the present embodiment includes a camera mounting unit 400, an automatic panhead mechanism (panhead mechanism unit) 151, and a control unit 80. The camera mounting unit 400 includes a base unit 40, a camera holding arm 41, and an arm rotation mechanism unit 42. The base unit 40 is fixed to the column portion 50 or the like in the stadium. The camera holding arm 41 is an arm on which the camera units 100a and 100b including a plurality of camera main bodies 10 and a plurality of the lenses 11 can be installed in parallel in the horizontal direction. The arm rotation mechanism unit 42 rotates the camera holding arm 41 at a position where the two camera units 100a and 100b are substantially symmetrically arranged on the camera holding arm 41. The arm rotation mechanism unit 42 rotatably supports the camera holding arm 41 relative to the base unit 40 such that the camera holding arm 41 can be rotated around the rotation axis r corresponding to the vertical direction with respect to the horizontal direction in which the plurality of camera units are installed in parallel.

The automatic panhead mechanism 151 is a mechanism fixed to the camera holding arm 41 to hold the camera units 100a and 100b and can adjust the orientations of the camera units 100a and 100b to instructed directions. The automatic panhead mechanism 151 includes a movable mechanism (movable mechanism unit) 17 for adjusting the camera unit in the pan direction, and a movable mechanism (movable mechanism unit) 18 for adjusting the camera unit in the tilt direction. Similar to the adjustment mechanism 22 according to the first embodiment, the automatic panhead mechanism 151 enables the plurality of cameras to rotate in the same directions along the pan rotation direction. Additionally, the automatic panhead mechanism 151 enables the plurality of cameras to rotate in opposite directions along the pan rotation direction.

The control unit 80 can transmit an instruction to and drive at least the arm rotation mechanism unit 42 and the automatic panhead mechanism 151.

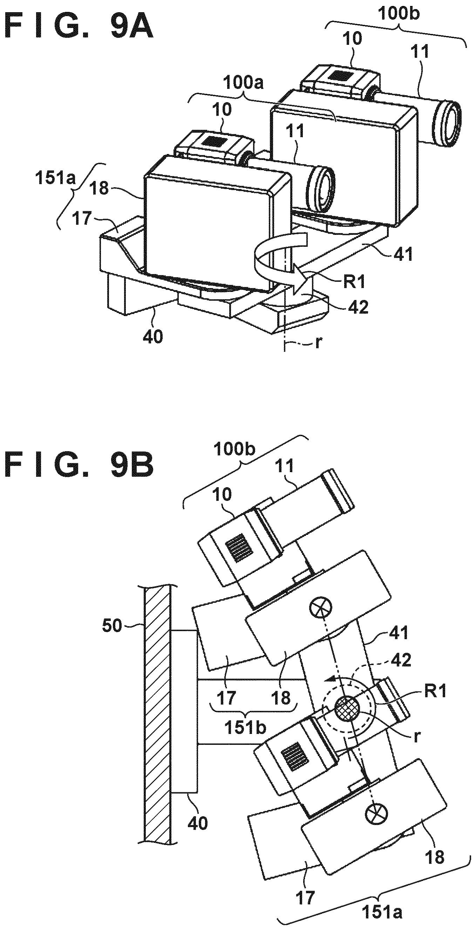

FIGS. 9A and 9B are diagrams illustrating that the camera holding arm 41 has been rotated in the R1 direction around the rotation axis r by the arm rotation mechanism unit 42. The control unit 80 provides instructions to automatic panhead mechanism 151a and 151b via cables 51a and 51b, respectively, and rotates each of the camera units 100a and 100b in instructed directions along a pan direction CP and a tilt direction CT. Furthermore, the control unit 80 provides an instruction to the arm rotation mechanism unit 42 via a cable 52 to rotate the camera holding arm 41 to a desired angle.

In the present embodiment, the cables 51a and 51b and the cable 52 transmit signals providing instructions for the respective rotation directions, and also supplies driving power to each of the automatic panhead mechanisms 151a and 151b and the arm rotation mechanism unit 42.

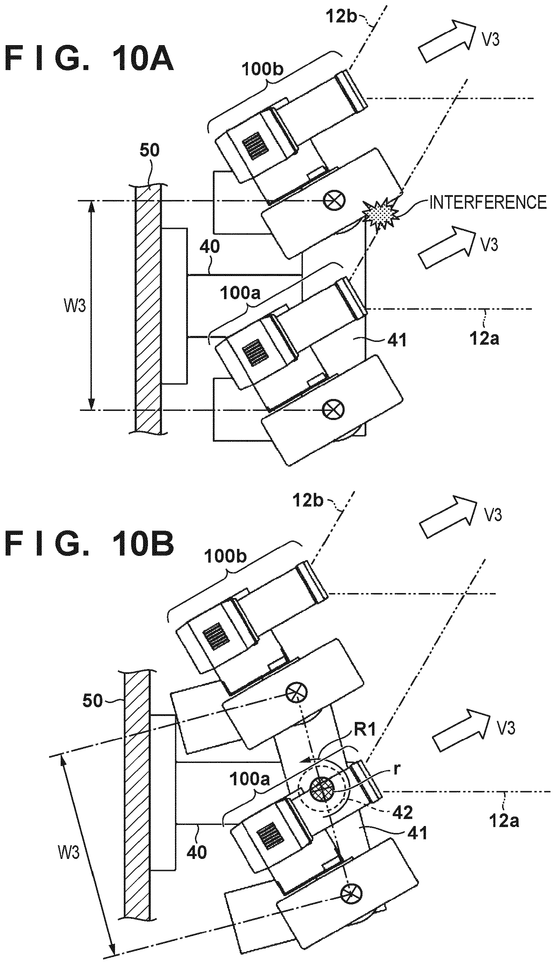

Now, effects of the camera mounting apparatus according to the present embodiment will be described taking, as an example, a case where the image capturing direction of each of the camera units 100a and 100b is an oblique direction V3 with respect to the forward direction of the column portion 50 in the stadium on which the camera mounting unit 400 is mounted, as illustrated in FIG. 10A and FIG. 10B.

FIG. 10A is an example of a case in which the arm rotation mechanism unit 42 is not operated as illustrated in FIG. 10B. In the example illustrated in FIG. 10A, in a case where a mounting interval between the camera units 100a and 100b in the horizontal direction is w3, the automatic panhead mechanism 151b holding the camera unit 100b enters the image capturing range 12a of the camera unit 100a, obstructing image capturing. In contrast, with the mounting apparatus according to the present embodiment, in a case where the image capturing direction of each of the camera units is set to the oblique direction V3, the camera holding arm 41 holding the two camera units 100a and 100b can be rotated by the arm rotation mechanism unit 42 as illustrated in FIG. 10B.

Thus, even in a case where the installation interval between the two camera units 100a and 100b is w3 as is the case with FIG. 10A, rotation of the camera holding arm 41 using the arm rotation mechanism unit 42 can prevent the camera unit 100b and the automatic panhead mechanism 151b holding the camera unit 100b from entering the image capturing range 12a of the camera unit 100a.

This may increase the degree of freedom in the image capturing directions of the camera units installed in parallel without increasing installation interval between the camera units 100a and 100b from w3. Furthermore, according to the present embodiment, in addition to the effects of the first embodiment, the control unit 80 controls the arm rotation mechanism unit 42 and the automatic panhead mechanisms 151a and 151b that can adjust the image capturing direction of each of the camera units 100a and 100b, thus enabling the image capturing direction of each camera unit to be adjusted in a short time.

In this manner, according to the present embodiment, the image capturing directions of the plurality of camera units can be remotely changed, and thus, for example, in a case where a plurality of competitions are conducted in the same stadium, image capturing can be performed switching between the plurality of competitions in different competition locations in a short time. Furthermore, rotation of the arm rotation mechanism unit 42 may increase the degree of freedom in an image capturing location. In addition, since the image capturing directions of the camera units can be remotely changed, the image capturing directions can be switched even in a situation where spectators are in the stadium or the like.

Note that, in the present embodiment, similarly to the configuration illustrated in FIG. 6, the position of the arm rotation mechanism unit may be rotated around the end portion of the camera holding arm holding the plurality of camera units.

Additionally, the control unit 80 may also be configured to control camera-side settings such as adjustment of the focus and exposure of each of the camera units. Accordingly, in a case where the object to be captured is changed, each of the camera units can be easily set to optimal setting.

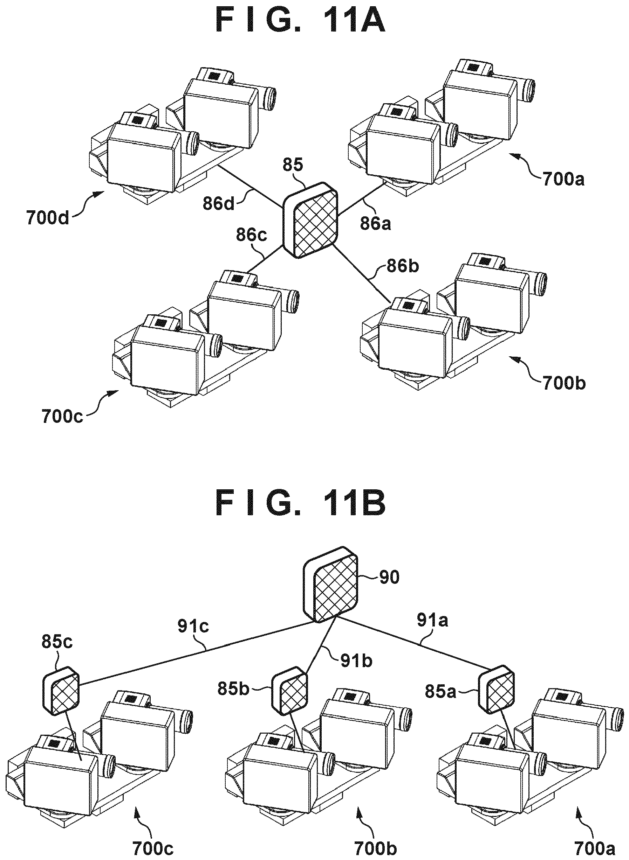

Note that, in the present embodiment, the control unit 80 is installed in the camera mounting apparatus on each of the column portions in the stadium, but that no such limitation is intended. For example, as illustrated in FIG. 11A, the control unit 80 may be configured as a control system in which one control unit 85 is connected to each of mounting apparatuses 700a to 700d via control cables 86a to 86d, respectively, to control a plurality of the arm rotation mechanisms, a plurality of the automatic panhead mechanisms, and/or a plurality of the camera units.

Additionally, as illustrated in FIG. 11B, the control system may be configured to include a plurality of mounting apparatuses. Specifically, the control system may be configured such that a plurality of control units 85a to 85c controlling a plurality of mounting apparatuses can be connected to an integration unit 90 via respective control cables 91a to 91c and that the control units 85a to 85c can be integrated and controlled by the integration unit 90.

Such integrated control enables a quicker change in image capturing directions of the camera units, and also allows centralized confirmation of the status of each of the camera units and the status of the rotation mechanism.

The control units 80 and 85a to 85c and the integration unit 90 may be information processing apparatuses such as personal computers in a monitoring chamber for monitoring the stadium. A configuration in which a plurality of arm rotation mechanisms and a plurality of automatic panhead mechanisms connected in a wired or wireless manner can be remotely controlled may be employed.

The present disclosure may inhibit the adjacently installed camera from entering the image capturing range.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiments), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiments). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present disclosure has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A mounting apparatus comprising:
base means (30) configured to fix the mounting apparatus to an object;
holding means (31) on which a plurality of image capturing apparatuses are installable;
rotation mechanism means (32) installed on the base means to rotatably support the holding means; and
a plurality of adjustment means (22) configured to rotate at least around an axis substantially parallel to a rotation axis of the rotation mechanism means, the plurality of adjustment means enabling the plurality of image capturing apparatuses to rotate in an identical direction around an axis substantially parallel to the rotation axis of the rotation mechanism means.

2. The mounting apparatus according to claim 1, wherein
each of the plurality of adjustment means is configured to adjust an orientation of each of the plurality of image capturing apparatuses.

3. The mounting apparatus according to any one of claims 1 or 2, wherein
the plurality of adjustment means are provided on the holding means, and
the image capturing apparatus is installable on the holding means via the adjustment means corresponding to the image capturing apparatus.

4. The mounting apparatus according to any one of claims 1 to 3, wherein
the plurality of image capturing apparatuses are installable on the holding means in parallel in a horizontal direction with respect to a ground surface.

5. The mounting apparatus according to any one of claims 1 to 4, wherein
the base means is connected to the holding means via the rotation mechanism means at an end portion of the holding means.

6. The mounting apparatus according to any one of claims 1 to 5, wherein
the adjustment means includes a first movable mechanism means configured to adjust the image capturing apparatus in a pan direction, and a second movable mechanism means configured to adjust the image capturing apparatus in a tilt direction.

7. The mounting apparatus according to any one of claims 1 to 6, further comprising:
control means (80) configured to control the rotation mechanism means and the plurality of adjustment means.

8. The mounting apparatus according to claim 7, wherein
the control means is configured to control rotation mechanism means and a plurality of adjustment means included in another mounting apparatus.

9. The mounting apparatus according to any one of claims 1 to 8, wherein
the plurality of image capturing apparatuses are used for generating an image corresponding to a specified viewpoint based on images acquired by image capturing of the plurality of image capturing apparatuses.

10. An image capturing system, comprising:
the mounting apparatus (300) according to any one of claims 1 to 9; and
a plurality of image capturing apparatuses (100) that are installed on the mounting apparatus.

11. An image generation system, comprising:
the image capturing system according to claim 10; and
a generation apparatus configured to generate an image corresponding to a specified viewpoint based on images acquired by image capturing of the plurality of image capturing apparatuses.
